# FASCICULE DE BREVET EUROPEEN

(11) **EP 2 168 913 B1**
(45) Date de publication et mention de la délivrance du brevet: **14.11.2018**
(21) Numéro de dépôt: 09290691.6
(22) Date de dépôt: 11.09.2009
(51) Int. Cl.: C01B 3/56, C01B 3/52, C01B 3/48, B01D 53/04

(54) **PROCÉDÉ DE PRODUCTION D'HYDROGÈNE AVEC CAPTATION TOTALE DU C02 ET RECYCLAGE DU MÉTHANE NON CONVERTI**
HERSTELLUNGSVERFAHREN VON WASSERSTOFF MIT VOLLSTÄNDIGER AUFNAHME VON CO2 UND RECYCLING DES NICHT UMGEWANDELTEN METHANS
HYDROGEN PRODUCTION METHOD WITH COMPLETE CAPTURE OF CO2 AND RECYCLING OF NON-CONVERTED METHANE

(30) Priorité: 29.09.2008 FR 0805390
(43) Date de publication de la demande: 31.03.2010
(73) Titulaire: IFP Energies nouvelles, 92500 Rueil-Malmaison (FR)
(72) Inventeur: Fischer, Beatrice, 69005 Lyon (FR); Giroudiere, Fabrice, 69530 Orlienas (FR); Ambrosino, Jean-Louis, 69360 Ternay (FR); Thomas, Michel, 69003 Lyon (FR)
(74) Mandataire: IFP Energies nouvelles

(56) Documents cités:
- EP-A- 1 146 009
- EP-A- 1 582 502
- WO-A-2008/081102
- US-A- 4 695 442
- US-A- 5 669 960
- US-A1- 2003 191 196

## Description

La présente invention concerne le domaine de la production d'hydrogène, et plus particulièrement un procédé de production d'hydrogène avec captation totale du CO₂ et recyclage du méthane non converti.

Le réchauffement climatique de la planète, observé depuis l'ère industrielle selon la communauté scientifique internationale, pourrait modifier dramatiquement les climats et écosystèmes de nombreuses régions du globe. L'émission des gaz à effet de serre, et spécialement le dioxyde de carbone (CO₂) semble être responsable de ce réchauffement.

Les énergies fossiles (gaz naturel, pétrole, charbon) constituent une part importante des énergies facilement disponibles sur la planète. Or ces énergies fossiles, lorsqu'elles sont utilisées, produisent du CO₂ (généralement lors d'une étape de combustion) et participent ainsi au réchauffement climatique.

Une des solutions préconisées pour lutter contre le réchauffement climatique par l'émission de gaz à effet de serre est de capturer le CO₂ produit, puis de le stocker dans le sous-sol. Plusieurs voies sont explorées, dont le captage en précombustion qui consiste à convertir l'énergie fossile en hydrogène avec captage et stockage du CO₂ coproduit. L'hydrogène, vecteur énergétique, peut alors être brûlé librement sans émission de gaz à effet de serre.

Il existe actuellement plusieurs moyens de produire industriellement de l'hydrogène à partir des énergies fossiles. Le moyen le plus répandu est le vaporéformage du gaz naturel réalisé dans un four (en anglais SMR: Steam Methane Reforming) qui présente l'avantage d'utiliser une charge ayant un ratio hydrogène/carbone élevé compte tenu de la forte teneur en méthane dans sa composition. De façon simplifiée, la réaction catalytique de SMR peut s'écrire de la manière suivante:

*CH*₄+*H*₂*O*↔*CO*+3*H*₂

Cette réaction, très endothermique est équilibrée. Elle est favorisée par des températures élevées et se fait en général dans un four chauffé par un combustible tel que le gaz naturel. Classiquement l'unité de SMR est suivie d'une étape de conversion à la vapeur (WGS: Water Gas Shift) qui permet de maximiser la production d'hydrogène par la réaction suivante:

*CO*+*H*₂*O*↔*CO*₂+*H*₂

Lorsqu'il faut capter le CO₂ en vue de son stockage, il est possible d'utiliser ensuite une unité de lavage aux amines (MDEA activée par exemple) qui va extraire le CO₂ du flux riche en hydrogène, qui sera ensuite envoyé par exemple dans une turbine à gaz en vue de produire de l'électricité, tandis que le CO₂ sera comprimé et réexpédié en sous-sol.

Dans ce type de procédé l'objectif de captage du CO₂ n'est pas du tout atteint, car non seulement il reste encore du CO₂ à la sortie de la turbine du à la présence de méthane, de CO et de CO₂ encore présent dans l'hydrogène, mais il faut davantage de gaz naturel à l'entrée que s'il était envoyé directement dans la turbine. De plus le four dans lequel est réalisé le vaporéformage utilise du gaz naturel et donc émet beaucoup de CO₂. Le taux d'évitement du CO₂ est donc faible.

Une amélioration à cette technique consiste à ajouter une unité d'adsorption sur tamis moléculaire des impuretés modulée en pression (PSA). On obtient à ce moment la deux flux: un flux d'hydrogène pur à 99.99 % et un flux d'impuretés contenant au moins 20% d'hydrogène. Ce flux à basse pression est envoyé dans des brûleurs du four de vaporeformage, ce qui diminue le gaz naturel nécessaire pour le four, donc la production de CO₂. Cependant le taux d'évitement du CO₂ reste faible, puisque d'une part les impuretés vont sortir sous forme de CO₂ dans les fumées du four, et d'autre part il faut produire davantage d'hydrogène, donc utiliser davantage de gaz naturel pour la charge du vaporéformage.

EP 1 146 009 A1 décrit un procédé de co-production de monoxyde de carbone et d'hydrogène de haute pureté comprenant entre autres les étapes suivantes: - une étape de production d'un gaz de synthèse dans une unité de vaporéformage, - une étape de conversion à la vapeur du gaz de synthèse obtenu à l'étape précédente produisant un flux d'hydrogène contenant du dioxyde de carbone et d'autres impuretés, - une étape de captage du dioxyde de carbone présent dans le flux obtenu à l'étape de conversion à la vapeur permettant de séparer le dioxyde de carbone du flux d'hydrogène, et - une étape de captage et de recyclage vers le vaporéformage d'impuretés présentes dans le flux d'hydrogène; ladite étape de captage et recyclage des impuretés est réalisée dans une unité d'adsorption modulée en pression.

La présente invention a donc pour objet de pallier un ou plusieurs des inconvénients de l'art antérieur en proposant un procédé de production d'hydrogène permettant de capter les impuretés présentes en fin de production, et notamment le méthane, et de les recycler vers le vaporéformage sans perte d'énergie

Pour cela la présente invention propose un procédé de production d'hydrogène à partir d'une charge hydrocarbonée et de vapeur d'eau comprenant :
- une étape de production d'un gaz de synthèse dans une unité de vaporéformage de la charge hydrocarbonée en présence de la vapeur d'eau, un combustible apportant la chaleur nécessaire à la réaction,
- une étape de conversion à la vapeur du gaz de synthèse obtenu à l'étape précédente produisant un flux d'hydrogène contenant du méthane et du dioxyde de carbone,
- une étape de captage du dioxyde de carbone présent dans le flux obtenu à l'étape de conversion à la vapeur permettant de séparer le dioxyde de carbone du flux d'hydrogène,
- une étape de captage et de recyclage vers le vaporéformage d'impuretés présentes dans le flux d'hydrogène; ladite étape de captage et recyclage des impuretés est réalisée dans une unité d'adsorption comprenant au moins deux adsorbeurs et comprend au moins les phases successives suivantes :
   > adsorption des impuretés sur le premier adsorbeur,
   > régénération du premier adsorbeur et adsorption des impuretés sur le deuxième adsorbeur, ladite régénération de l'adsorbeur est réalisée de la façon suivante:
      - isolement de l'adsorbeur lorsqu'il est saturé et mise en ligne du deuxième adsorbeur,
      - balayage du premier adsorbeur, avec un flux de charge hydrocarbonée destiné à servir de charge à l'unité de vaporéformage, et chauffé par échange avec de la vapeur d'eau destinée également à l'unité de vaporéformage, jusqu'à une température supérieure d'au moins 20°C à la température de condensation de la vapeur d'eau,
      - régénération de l'adsorbeur réchauffé et désorption des impuretés par circulation de vapeur d'eau surchauffée d'au moins 20°C destinée à l'unité de vaporéformage,
      - élimination de la vapeur d'eau présente dans l'adsorbeur régénéré par un balayage de l'adsorbeur avec un flux d'hydrogène pur et chaud,
      - balayage de l'adsorbeur débarrassé de la vapeur d'eau par un flux d'hydrogène pur et froid.

Selon un mode de réalisation de l'invention la charge hydrocarbonée est du gaz naturel.

Dans un mode de réalisation de l'invention l'étape d'adsorption des impuretés est réalisée à une température comprise entre 20°C et 100°C.

Dans un mode de réalisation de l'invention l'étape d'adsorption est réalisée avec un adsorbant de type charbon actif ou tamis moléculaire carbone.

Selon un mode de réalisation de l'invention l'étape d'adsorption est réalisée avec un charbon préparé par activation physique à la vapeur.

Selon un mode de réalisation de l'invention l'étape d'adsorption est réalisée avec un charbon actif contenant des micropores dont le diamètre est inférieur à 2 nm, des macropores dont le diamètre est supérieur à 50 nm, et une quantité plus faible de mésopores dont le diamètre est compris entre 2 et 50 nm.

Dans le procédé de production d'hydrogène selon l'invention les impuretés adsorbées sont du méthane, du dioxyde de carbone et du monoxyde de carbone.

Selon un mode de réalisation de l'invention une partie du flux d'hydrogène chaud et saturé en vapeur d'eau obtenu après balayage de l'adsorbeur régénéré est envoyé vers les brûleurs de l'unité de réformage, et l'autre partie du flux est envoyé en mélange avec de la vapeur d'eau de dilution vers une turbine à gaz pour produire de l'électricité.

Selon un mode de réalisation de l'invention une partie du flux d'hydrogène froid obtenu après le balayage de l'adsorbeur régénéré est envoyé vers une unité extérieure, tandis que le reste de l'hydrogène est utilisé pour le balayage chaud, puis envoyé vers les brûleurs de l'unité de réformage.

Selon un mode de réalisation de l'invention le flux d'hydrogène réchauffé obtenu après la phase de refroidissement de l'adsorbeur est à nouveau réchauffé par échange avec de la vapeur d'eau et utilisé dans la phase d'élimination de la vapeur d'eau présente dans l'absorbeur.

Selon un mode de réalisation de l'invention l'étape de production du gaz de synthèse est réalisée à une pression comprise entre 2,5 MPa et 3,5 MPa.

Selon un mode de réalisation de l'invention l'étape de captage du dioxyde de carbone est réalisée dans une unité d'amine utilisant de la méthyldiéthylamine et au moins une autre amine.

D'autres caractéristiques et avantages de l'invention seront mieux compris et apparaîtront plus clairement à la lecture de la description faite, ci-après, en se référant aux figures annexées et données à titre d'exemple:
- la figure 1 représente le schéma classique du procédé de production d'hydrogène selon l'art antérieur,
- la figure 2 représente une variante du schéma classique du procédé de production d'hydrogène selon l'art antérieur,
- la figure 3 représente une variante du schéma de production d'hydrogène selon l'invention,
- la figure 4 représente en détail l'unité d'adsorption du schéma de production d'hydrogène selon l'invention,
- la figure 5 représente en détail une partie de l'unité d'adsorption du schéma de production d'hydrogène selon l'invention,
- la figure 6 représente l'arrangement et le vannage des adsorbeurs de l'unité d'adsorption
- la figure 7 représente une phase du schéma de production d'hydrogène selon l'invention,
- la figure 8 représente une autre phase du schéma de production d'hydrogène selon l'invention,
- la figure 9 représente une autre phase du schéma de production d'hydrogène selon l'invention,
- la figure 10 représente une autre phase du schéma de production d'hydrogène selon l'invention,
- la figure 11 représente une autre phase du schéma de production d'hydrogène selon l'invention,
- la figure 12 représente une variante du schéma de production d'hydrogène pur (non mélangé à la vapeur d'eau) selon l'invention.

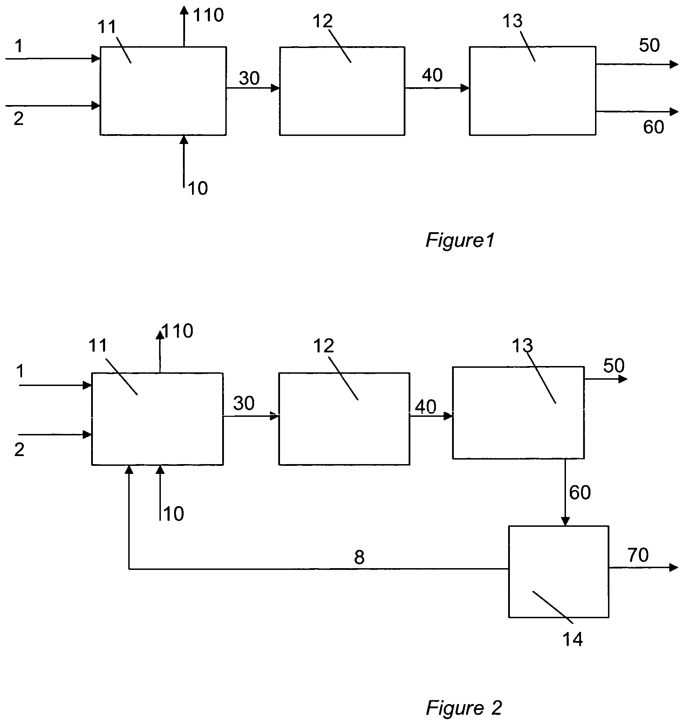

Comme illustré sur les figures 1, 2 et 3, lors du procédé de production d'hydrogène un flux de gaz naturel circulant dans un conduit (1) et un flux de vapeur d'eau circulant dans un conduit (2) sont envoyés comme charge dans une unité de vaporéformage (11). La chaleur nécessaire à la réaction est produite par un flux de combustible, par exemple du gaz naturel, envoyé par un conduit (10) dans le four de vaporéformage. Cette réaction produit en sortie du four (110) un flux de fumées contenant du gaz carbonique. Le flux de gaz de synthèse circulant dans un conduit (30) obtenu par la réaction de vaporéformage contient principalement de l'hydrogène (H₂), du monoxyde de carbone (CO), du dioxyde de carbone (CO₂), ainsi que de la vapeur d'eau (H₂O) et un peu de méthane n'ayant pas réagi (CH₄), car la réaction est équilibrée et même à une température de 900°C, il reste environ 4% de méthane n'ayant pas réagi. Ce flux de gaz de synthèse est envoyé par un conduit (30) à l'unité de conversion à la vapeur (12). Dans cette unité l'essentiel du monoxyde de carbone est converti en dioxyde de carbone à l'aide de la vapeur d'eau, libérant du même coup un peu plus d'hydrogène. Cette réaction aussi est équilibrée, et il reste finalement un peu de monoxyde de carbone (0.5% dans des conditions de conversion poussée). En sortie de l'unité de conversion (12), le flux de conversion circulant dans un conduit (40) obtenu contient essentiellement de l'hydrogène et du dioxyde de carbone. Ce flux circulant dans un conduit (40) contient également un peu de méthane et de monoxyde de carbone, le reste de vapeur d'eau ayant été condensé après les réacteurs de conversion à la vapeur.

Le flux de conversion est ensuite envoyé vers une unité de captage de CO₂ (13), qui peut être une unité d'amines, et une unité d'amine utilisant de la méthyldiéthylamine (MDEA) en combinaison avec au moins une autre amine est particulièrement adaptée. Il est possible d'utiliser d'autres unités de captage de CO₂ bien connues de l'homme du métier.

L'essentiel du CO₂ est séparé et envoyé par un conduit (50) vers une unité de compression et de séchage, pour être ensuite transporté vers un lieu de réinjection tel qu'un gisement épuisé ou une couche géologique adaptée.

Le gaz riche en hydrogène est évacué par un autre conduit (60). Ce gaz comprend un peu de méthane, de monoxyde de carbone et un peu de dioxyde de carbone non capturé (environ 0.5%).

Dans le procédé selon l'invention ce gaz riche en hydrogène est dirigé vers une unité d'absorption sur charbon actif (15), contrairement au procédé de l'art antérieur ou il est dirigé vers une unité d'adsorption des impuretés sur tamis moléculaire (14), modulée en pression (procédé PSA). Dans ce denier cas l'hydrogène pur à 99.99 % est évacué par un conduit (70), tandis qu'environ 20% de l'hydrogène est envoyé dans une purge (8) avec la totalité des impuretés (figure 2).

Dans l'unité d'adsorption (15) utilisée dans le procédé selon l'invention, qui peut donc être par exemple sur charbon actif ou tout autre solide adsorbant tel que décrit dans les exemples suivants, la régénération se fait à haute pression par de la vapeur d'eau amenée par un conduit (2). Cette vapeur d'eau est ensuite utilisée comme charge de l'unité de vaporéformage amenée par le conduit (90). Les impuretés (CH₄, CO, CO₂) sont de cette façon recyclées au réacteur de vaporéformage. Pour ne pas avoir de CO₂ émis par le four de vaporéformage, on utilise une partie de l'hydrogène produit sortant par le conduit (70) dans l'unité de vaporéformage. Une partie de l'hydrogène issu du conduit (70) est donc envoyée vers les brûleurs de l'unité de vaporéformage par le conduit (10) de sorte que les fumées sortant par le conduit (110) ne comportent pas de CO₂. Le reste de l'hydrogène est envoyé par le conduit (80) vers la turbine à gaz (16) en mélange avec de la vapeur d'eau de dilution arrivant par le conduit (17). Dans cette configuration, le taux d'évitement de CO₂ peut être proche de 100%.

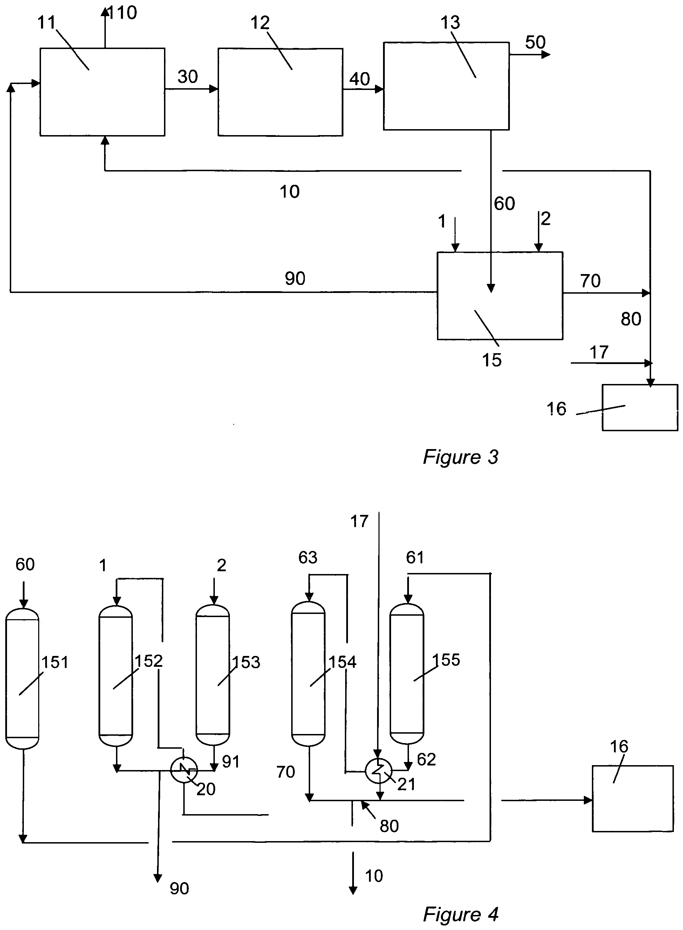

L'unité d'adsorption (15) utilisée dans la présente invention est constituée de plusieurs adsorbeurs, également appelés capacités (151 à 155). Le mode de fonctionnement est illustré sur la figure 4 dans une configuration à 5 adsorbeurs, configuration non limitative. Cette unité d'adsorption est alimentée en méthane de charge, nécessaire pour des phases ultérieures de purge et de pressurisation, par le conduit (1). Un nombre différent de capacités est évidemment possible sans sortir du cadre de la présente invention et par exemple 5 à 10, mais nous nous sommes limités à 5 pour pouvoir expliquer l'invention plus simplement.

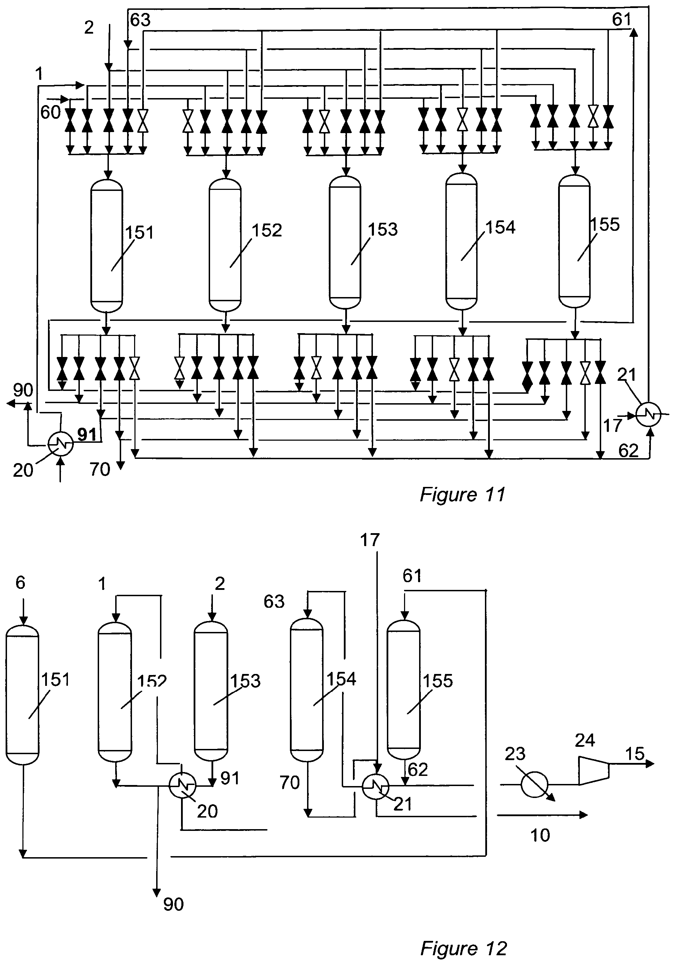

Le cycle d'adsorption dans l'unité d'adsorption (15) est constitué de plusieurs phases. Les cinq capacités (151 à 155) sont remplies d'adsorbant. Le flux de gaz riche en hydrogène à purifier arrivant par le conduit (60) est envoyé dans la première capacité (151) à une température comprise entre 20 et 100°C, de préférence entre 40°C et 80°C, et de manière très préférée entre 30°C et 70°C. Le méthane, le CO et le CO₂ contenu dans ce flux sont capturés sur l'adsorbant, et l'hydrogène purifié sort par le conduit (61). L'hydrogène, circulant dans le conduit (61) est ensuite envoyé dans la cinquième capacité (155) de manière à la refroidir jusqu'à la température d'opération qui se situe entre 20°C et 100°C. L'hydrogène réchauffé sort de la cinquième capacité par le conduit (62), et est envoyé vers un échangeur de chaleur (21) pour être encore réchauffé par échange avec de la vapeur d'eau de dilution arrivant par le conduit (17). L'hydrogène chaud sort de l'échangeur de chaleur (21) par le conduit (63) à une température au moins supérieure de 20°C à la température de condensation de la vapeur d'eau à la pression opératoire. L'hydrogène chaud qui est amené dans la quatrième capacité (154) par le conduit (63) permet d'évacuer la vapeur d'eau restant dans la capacité après l'étage de régénération. Cette vapeur d'eau est envoyée en mélange avec l'hydrogène en partie vers les brûleurs du four de vaporéformage par le conduit (10) et en partie vers la turbine à gaz (16) par le conduit (80). Dans une variante illustrée sur la figure 12, une partie de l'hydrogène circulant dans le conduit (62) est prélevé à la sortie de la capacité (155), refroidi par l'échangeur de chaleur (23) à l'aide d'eau de refroidissement ou d'air, et comprimé par le compresseur (24). On a ainsi un flux d'hydrogène pur envoyé par exemple vers une unité extérieure à des utilisateurs extérieurs par le conduit (15). Le reste de l'hydrogène du conduit (62) est chauffé par l'échangeur (21) avant de balayer la capacité (154), ressort par le conduit (70) de cette capacité, est mélangé ensuite avec la vapeur d'eau de dilution (17), est refroidi par l'échangeur (21), et est envoyé comme combustible vers le four de vaporéformage par le conduit 10

La troisième capacité (153) est balayée par de la vapeur d'eau amenée par le conduit (2). La vapeur d'eau chargée de méthane et de CO₂ est évacuée de la troisième capacité (153) par le conduit (91), est légèrement refroidie dans un deuxième échangeur de chaleur (20) par échange avec le gaz naturel arrivant par le conduit (1) puis mélangée avec le gaz naturel venant de la deuxième capacité (152), pour être ensuite envoyée par le conduit (90) vers l'unité de vaporéformage.

La deuxième capacité (152) est d'abord ramenée à la pression du gaz naturel qui est d'environ 3,5 MPa, puis réchauffée progressivement par balayage par du gaz naturel chaud (250°C à 350°C) arrivant par le conduit (1) après préchauffe par échange avec de la vapeur d'eau amenée par le conduit (91).

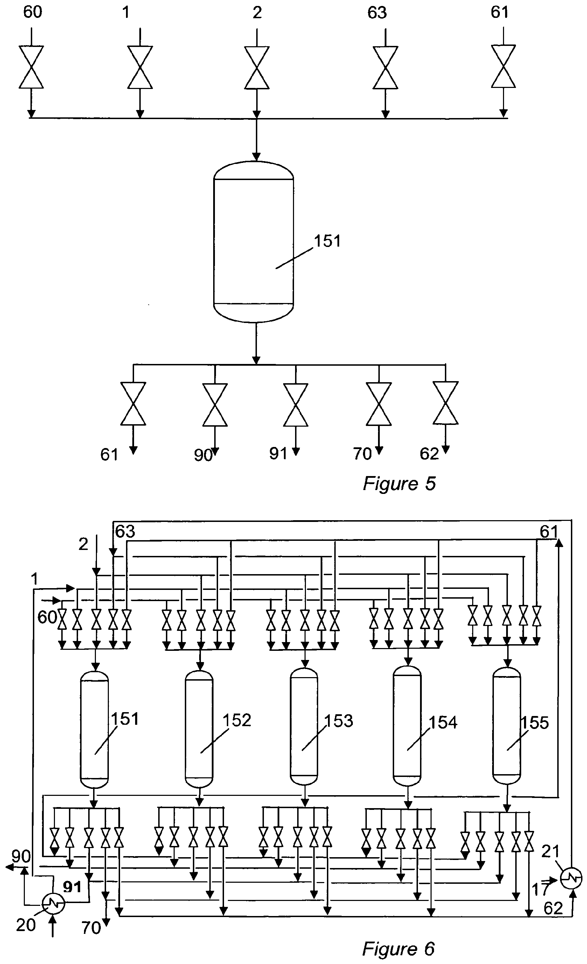

La figure 5 représente une des capacités ou adsorbeurs, par exemple la première (151) contenant la substance adsorbante qui peut être le charbon actif. Les conduits (60, 1, 2, 63 et 61), amenant respectivement l'hydrogène à purifier, le gaz naturel, la vapeur d'eau, l'hydrogène pur chaud et l'hydrogène pur froid, sont connectés à la capacité avec des vannes permettant d'isoler chacun des circuits. Les conduits (61, 90, 91, 70, et 62), évacuant respectivement l'hydrogène pur froid, le méthane vers l'unité de vaporéformage, la vapeur d'eau vers l'unité de vaporéformage, l'hydrogène pur saturé en vapeur d'eau et l'hydrogène pur, sont également connectés à la capacité avec des vannes d'isolement.

Sur cette figure dans un but de simplification, on a représenté l'arrivée de toutes les entrées en haut de la capacité, et toutes les sorties en bas, mais ceci est seulement une des possibilités et toutes les autres configurations sont possibles sans sortir de la présente invention.

La figure 6 représente l'arrangement de cinq capacités ou adsorbeurs en parallèle (151, 152, 153, 154 et 155) permettant un fonctionnement en continu de l'installation. Dans ce cas également un nombre différent de capacités est évidemment possible sans sortir du cadre de la présente invention, mais nous nous sommes limités à 5 pour pouvoir expliquer l'invention plus simplement.

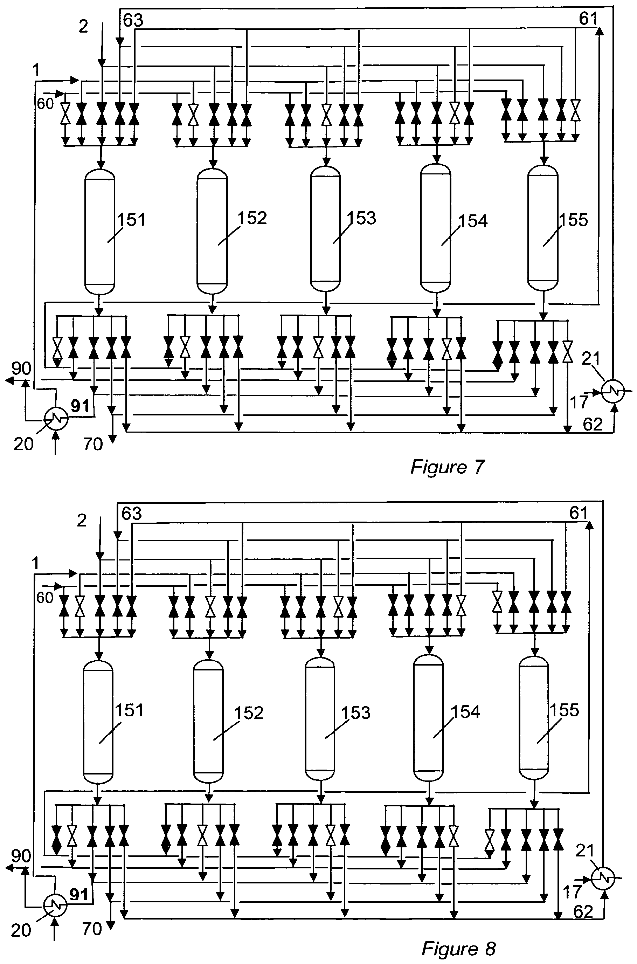

La figure 7 représente une première phase d'opération du cycle d'adsorption. Les vannes figurées pleines (en noir) sont fermées, et les autres sont ouvertes. La première capacité (151) reçoit de l'hydrogène froid et impur par le conduit (60), retient les diverses impuretés sur l'adsorbant, et l'hydrogène pur ressort par le conduit (61). La deuxième capacité (152) vient d'être retirée du circuit et entre en régénération. Dans un premier temps, on a une pressurisation par le méthane chaud arrivant par le conduit (1), puis l'adsorbant est chauffé par le méthane jusqu'à une température comprise entre 250°C et 350°C où la vapeur d'eau utilisée ensuite pour la régénération ne risque pas de condenser (tension de vapeur de l'eau à 2,5 MPa 225°C environ, à 3,5 MPa, environ 245°C). Le méthane en sortie d'adsorbant est envoyé par le conduit (90) vers l'unité de vaporéformage.

Pendant cette première phase la troisième capacité (153) est en régénération : la vapeur d'eau surchauffée est alimentée par le conduit (2), elle permet de désorber le méthane, le CO et le CO₂ présent sur l'adsorbant. Le mélange vapeur d'eau, méthane et impuretés va être renvoyé à l'unité de vaporéformage par le conduit (91), en mélange avec le méthane venant de la deuxième capacité (152).

La quatrième capacité (154) est en purge de vapeur d'eau grâce à la circulation d'hydrogène pur et chaud amené par le conduit (63), et renvoyé par le conduit (70). La cinquième capacité (155) est en refroidissement par l'hydrogène pur et froid amené par le conduit (61), l'hydrogène pur étant renvoyé par le conduit (62).

La figure 8 représente la phase suivante : la première capacité (151) passe en pressurisation et en chauffe, la deuxième capacité (152) est en régénération, la troisième capacité (153) est en purge, la quatrième capacité (154) est en refroidissement et la cinquième capacité (155) est en ligne sur l'hydrogène à purifier.

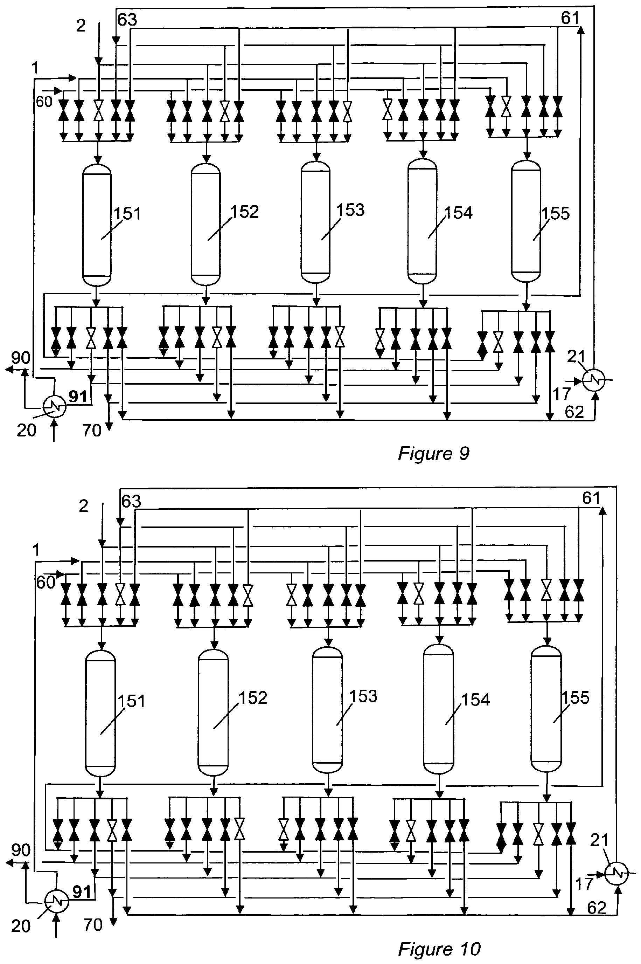

La figure 9 représente la troisième phase d'opération: la première capacité (151) passe en circulation de vapeur d'eau, la deuxième capacité (152) est en purge, la troisième capacité (153) est en refroidissement, la quatrième capacité (154) est en purification d'hydrogène et la cinquième capacité (155) est en chauffage par le méthane.

La figure 10 représente la quatrième phase d'opération: la première capacité (151) passe en purge, la deuxième capacité (152) est en refroidissement, la troisième capacité (153) est en purification d'hydrogène, la quatrième capacité (154) est en chauffage par le méthane et la cinquième capacité (155) passe en circulation de vapeur d'eau.

La figure 11 représente la cinquième phase d'opération: la première capacité (151) est en refroidissement, la deuxième capacité (152) est en purification d'hydrogène, la troisième capacité (153) est en chauffage par le méthane, la quatrième capacité (154) passe en circulation de vapeur d'eau et la cinquième capacité (155) passe en purge.

Le cycle complet est achevé, et la phase suivante est semblable à la première.

Les conditions opératoires ainsi que la composition des différents flux au cours du procédé sont récapitulés dans le tableau A ci-après, dans le cas par exemple d'un vaporéformage fonctionnant à 3,3 MPa.

**Tableau A**

| N° du flux | Composition | Pression (MPa) | Température (°C) |
|---|---|---|---|
| 1 | Gaz naturel (CH₄ principalement) | 3,5 | 300 (après préchauffe) |
| 2 | H₂O | 3,5 | 350 |
| 60 | H₂, CH₄, H₂O, εCO, εCO₂ | 2,6 | 62 |
| 61 | H₂ | 2,5 | 62 |
| 62 | H₂ | 2,5 | 62 - 300 |
| 63 | H₂ | 2,5 | 300 |
| 70 | H₂ + H₂O | 2,5 | 300 |
| 90 | CH₄, H₂O, εCO, εCO₂ | 3,4 | 320 |

Le procédé, objet de l'invention, permet donc de capter les impuretés présentes (CH₄, CO, CO₂) dans le flux riche en hydrogène (sortant du lavage aux aminés) et de les renvoyer, sous pression avec la charge du vaporéformage. Ce procédé peut se résumer de la façon décrite ci-après.

Ce procédé qui est cyclique utilise plusieurs capacités et comprend au moins les étapes successives suivantes:
- Etape 1: adsorption du méthane, CO et CO₂ dans le flux riche en hydrogène sur un adsorbant. Cette étape se déroule à basse température entre 20 et 100°C, de préférence entre 40°C et 80°C, et de manière très préférée entre 30°C et 70°C. L'hydrogène sort pur de cette étape. L'adsorbant peut par exemple être du charbon actif. Une fois l'adsorbant près d'être saturé, la capacité est isolée du circuit, et une autre capacité est mise en ligne.
- Etape 2: la capacité isolée dans l'étape précédente est ensuite remontée en pression et en température avec la charge du procédé (le gaz naturel) disponible en pression en limite d'unité et généralement préchauffée aux alentour de 150°C dans l'unité de vaporéformage. Le gaz naturel est chauffé aux alentours de 300°C par échange avec la vapeur d'eau avant d'être envoyé sur le lit d'adsorbant. La circulation du gaz naturel chaud dans la capacité permet de réchauffer le lit d'adsorbant ainsi que les parois jusqu'à une température supérieure d'au moins 20°C à la température de condensation de la vapeur d'eau à la pression d'opération (255°C à 3,5 MPa) ce qui évitera tout risque de condensation lors de l'étape suivante.
- Etape 3: l'adsorbant de la capacité réchauffée est ensuite régénéré par circulation de la vapeur utilisée à l'entrée du vaporéformage. La vapeur permet la désorption des impuretés de l'adsorbant (CH₄ principalement) et les renvoie dans le réacteur de vaporéformage. La vapeur d'eau en sortie de la capacité est envoyée dans un échangeur pour réchauffer le gaz naturel destiné au préchauffage.
- Etape 4 : la capacité est ensuite isolée, puis balayée par de l'hydrogène pur et chaud pour enlever la vapeur encore présente dans la capacité. L'hydrogène chaud et saturé en vapeur d'eau est ensuite envoyé, en partie vers les brûleurs du four de vaporéformage, et le reste en mélange avec de la vapeur d'eau de dilution vers la turbine à gaz. En effet les turbines actuelles ne peuvent pas fonctionner sur hydrogène pur, mais pourraient d'après l'homme de l'art fonctionner moyennant quelques adaptations avec un mélange à 50% d'hydrogène et de vapeur d'eau.
- Etape 5 : la capacité est refroidie par balayage d'hydrogène pur et froid. L'hydrogène réchauffé en sortie de capacité est encore réchauffé par échange avec la vapeur de dilution avant d'être renvoyé vers l'étape 4.

Ce procédé se distingue du procédé PSA (Pressure Swing Adsorption) utilisé dans l'art antérieur par le fait que la pression du procédé fluctue peu (l'amplitude des fluctuations de pression correspond seulement à la perte de charge total de la chaîne de production d'hydrogène: dans l'exemple la pression varie entre 3,1 et 3,7 MPa soit seulement 0,6 MPa de différence de pression). En effet, la désorption ne se fait pas par abaissement de la pression totale, mais par balayage à la vapeur qui a un double effet: désorption thermique et abaissement de la pression partielle de CH₄.

Cette invention présente donc les avantages suivants:
- permettre la capture quasi complète du CO₂.
- permettre le recyclage en pression du méthane vers l'entrée du vaporéformage sans compresseur, donc sans perte d'énergie.
- relaxer la contrainte sur la spécification du taux de CO₂ à capter dans l'unité de lavage aux amines située en amont, donc diminuer la consommation d'énergie afférente.

Les exemples suivant illustrent la présente invention.

### Exemple 1 selon l'invention:

On traite un débit de gaz, riche en hydrogène, en sortie d'une unité de désacidification (MDEA) de 5300 kmol/h sous une pression de 2,6 MPa et à une température de 57 °C, pour en extraire notamment le méthane en vue de son recyclage vers une unité de vaporéformage (steam reforming SMR).

La composition molaire de ce gaz est :
- H2 : 92,9 %
- CH4 : 5,4 %
- CO : 1,0 %
- CO₂ : 0,1 %
- H2O : 0,6 %

On veut notamment capter l'essentiel du méthane de ce gaz, ce qui représente un débit massique d'environ 4600 kg/h.

On utilise un charbon actif mise en forme sous forme d'extrudés dont le diamètre moyen est de 3,5 mm. Le volume microporeux, déterminé par adsorption d'azote à 77 K, est de 0,505 cm3/g, le volume mésoporeux de 0,129 cm3/g, et le volume macroporeux, déterminé par porosimétrie mercure, de 0,394 cm3/g. Sa surface spécifique B.E.T. est de 1263 m2/g.

La capacité d'adsorption du méthane sur ce charbon actif, pour une pression partielle de 0,143 MPa à 57 °C, est de 1,1 % masse.

On utilise pour le retrait du méthane un adsorbeur dont les caractéristiques sont un diamètre interne de 3,9 m et une hauteur totale de lit de 14,2 m. La quantité de charbon actif utilisée est de 70 t. La vitesse superficielle de l'hydrogène à purifier est de 1,5 m/min. La durée du cycle d'adsorption est de 10 min.

La régénération du lit d'adsorbant est effectuée selon les séquences :
- pressurisation de l'adsorbeur de 2,6 MPa à 3,5 MPa pendant 3 minutes par le gaz naturel servant de charge à l'unité de vaporéformage.
- désorption à contre courant de la phase précédente par de la vapeur surchauffée, la température entrée est de 380 °C et la pression de 3,5 MPa. Le débit de vapeur utilisé est de 50 t/h, pendant 7 minutes, la vitesse superficielle est de 4,3 m/min.
- dépressurisation de l'adsorbeur jusqu'à 2,6 MPa pendant 3 minutes, évacuation de la vapeur surchauffée encore présente dans l'adsorbeur par de l'hydrogène purifié obtenu lors de l'étape 1 avec un débit de 7 t/h pendant 7 minutes.

Dans ces conditions, 95 % du méthane est retiré du flux d'hydrogène. Ce méthane peut donc ensuite être recyclé dans l'unité de vaporéformage directement sans compresseur, donc sans perte d'énergie. Le fait de recycler le méthane permet une économie au niveau des quantités utilisées.

### Exemple 2 selon l'invention:

On veut produire 400 MW électrique à l'aide d'un cycle combiné (turbine à gaz + récupération de chaleur sur la sortie de la turbine avec production de vapeur et turbines à vapeur).

On dispose de gaz naturel à 7 MPa et 40°C, avec la composition molaire suivante:
- CH₄ : 91%
- C₂H₆ : 6%
- C₃H₈ : 1%
- CO₂ : 2%

Après vaporéformage, conversion à la vapeur, et absorption à la MDEA activée, le gaz produit est à 2,6 MPa, 57°C et a la composition molaire suivante :
- H₂ : 92.9%
- CH₄ : 5.4%
- CO : 1%
- CO₂: 0.1%
- H₂O : 0.6%

Il est surchauffé de 5°C pour ne plus être à saturation et éviter toute condensation d'eau sur l'adsorbant.
Le débit d'hydrogène pur nécessaire pour la turbine est de 284 700 Nm3/h
Le débit d'hydrogène pur nécessaire pour les fours de vaporéformage est de 256 350 Nm3/h
Le débit d'hydrogène en entrée de séparation est de 557 280 Nm3/h
Le débit de gaz naturel est de 166 387 Nm3/h
Le débit de vapeur d'eau pour le vaporéformage (3,6 MPa, 380°C) est de 476 314 Nm3/h
Le débit de vapeur d'eau de dilution est de 284 700 Nm3/h

### Etape 1 :

Lors de cette étape, l'hydrogène sortie unité de désacidification (MDEA) est purifié, par adsorption notamment de CH₄.

La pression est comprise entre 1 et 10 MPa, préférentiellement entre 2 et 8 MPa, et très préférentiellement entre 1,5 et 4 MPA, et la température est comprise entre 20 et 100 °C, et préférentiellement entre 40 et 80 °C.

La vitesse du gaz est comprise entre 0,5 et 20 m/min, et préférentiellement entre 1 et 10 m/min.

La durée de la phase d'adsorption est comprise entre 1 et 60 minutes, préférentiellement entre 1 et 30 minutes, et préférentiellement entre 1 et 15 minutes.

### Etape 2 :

Lors de cette étape, on réalise une pressurisation de l'adsorbeur, qui contient essentiellement l'hydrogène à purifier, par le gaz naturel. La variation de pression est celle existant entre la pression de l'hydrogène à purifier et la pression de la vapeur d'eau surchauffée disponible.

La montée en pression est réalisée à une vitesse comprise entre 0,05 et 2 MPa/min, préférentiellement entre 0,1 et 1 MPa/min, et préférentiellement entre 0,2 et 0,5 MPa/min.

La température est comprise entre 20 et 400 °C, préférentiellement entre 50 et 300 °C.

### Etape 3 :

Lors de cette étape, on réalise la désorption des composés adsorbés, et notamment la désorption de CH4, à l'aide de vapeur d'eau surchauffée.

La pression est comprise entre 1 et 10 MPa, préférentiellement entre 2 et 8 MPa, et très préférentiellement entre 1,5 et 4 MPA, et la température est comprise entre 20 et 400 °C, et préférentiellement entre 50 et 300 °C.

La vitesse du gaz est comprise entre 0,5 et 20 m/min, et préférentiellement entre 1 et 10 m/min.

La durée de la phase de désorption est comprise entre 1 et 180 minutes, préférentiellement entre 1 et 30 minutes, et préférentiellement entre 1 et 15 minutes.

La durée de la phase de désorption peut être choisie de telle manière à ce que la température de la vapeur en sortie d'adsorbeur soit supérieure de 5 °C à la température de rosée de la vapeur d'eau à la pression considérée. En procédant ainsi, on limite fortement le risque de condensation d'eau dans la mésoporosité de l'adsorbant.

### Etape 4 :

Lors de cette étape, on réalise une purge de la vapeur d'eau résiduelle encore contenue dans l'adsorbeur à la fin de l'étape 3 de désorption.

La pression est comprise entre 1 et 10 MPa, et préférentiellement entre 2 et 8 MPa, et la température est comprise entre 20 et 400 °C, et préférentiellement entre 50 et 300 °C. La vitesse du gaz est comprise entre 0,5 et 20 m/min, et préférentiellement entre 1 et 10 m/min.

La durée de cette phase de purge est comprise entre 1 et 180 minutes, préférentiellement entre 1 et 30 minutes, et préférentiellement entre 1 et 15 minutes.

La durée de cette phase de purge peut être choisie de manière à balayer l'adsorbeur avec un volume de gaz compris par exemple entre 1 et 100 volumes d'adsorbeur, préférentiellement entre 2 et 50 volumes d'adsorbeur.

Le gaz utilisé dans cette étape peut être par exemple tout ou une partie de l'hydrogène purifié produit lors de l'étape 5 ou de l'étape 1.

### Etape 5 :

Lors de cette étape, on réalise un refroidissement de l'adsorbeur qui vient d'être purgé de la vapeur d'eau surchauffée résiduelle dans l'étape 4.

La pression est comprise entre 1 et 10 MPa, et préférentiellement entre 2 et 8 MPa, et la température est comprise entre 20 et 200 °C, et préférentiellement entre 50 et 100 °C. La vitesse du gaz est comprise entre 0,5 et 20 m/min, et préférentiellement entre 1 et 10 m/min.

La durée de la phase de refroidissement de l'adsorbant est comprise entre 1 et 180 minutes, préférentiellement entre 1 et 30 minutes, et préférentiellement entre 1 et 15 minutes.

Le gaz utilisé dans cette étape peut être par exemple tout ou une partie de l'hydrogène purifié produit lors de l'étape 1.

### Solide adsorbant :

Selon l'invention, l'étape de désorption des impuretés présentes dans l'hydrogène et adsorbées sur le solide est réalisée par de la vapeur d'eau surchauffée. Le solide adsorbant doit être capable de résister à des températures élevées, typiquement comprises entre la température ambiante et 350 °C, en présence de vapeur d'eau surchauffée. Selon l'invention, l'adsorbant sera choisi par les adsorbants de type charbons actifs ou tamis moléculaires carbone.

Parmi le groupe des charbons actifs, on choisira préférentiellement les charbons actifs ayant été préparés par activation physique à la vapeur, plutôt que par activation chimique par exemple à l'acide. Les conditions d'activation sont en effet plus sévères que celles rencontrées dans les conditions de l'invention, notamment pour la température qui est généralement comprise entre 600 et 900 °C.

On choisira préférentiellement un charbon actif contenant essentiellement des micropores, dont le diamètre est typiquement inférieur à 2 nm, et des macropores, dont le diamètre est supérieur à 50 nm, et une quantité la plus faible possible de mésopores (diamètres compris entre 2 et 50 nm). Ces diamètres peuvent être calculés à partir des isothermes d'adsorption d'azote à 77 K selon par exemple la méthode B.J.H. (domaine des mésopores), bien connue de l'homme de l'art, et des courbes d'intrusion de mercure selon la loi de Washburn (domaine des macropores), également bien connue de l'homme de l'art.

La raison d'un tel choix s'explique par le fait que la vapeur d'eau présente dans le lit d'adsorbant lors notamment des étapes 3 et 4 peut conduire au phénomène de condensation capillaire dans les mésopores du charbon actif, notamment si la température de la vapeur surchauffée baisse sensiblement jusqu'à atteindre la température de rosée à la pression considérée. La pression relative de la vapeur d'eau pouvant donner lieu à ce phénomène de condensation capillaire dans les mésopores peut être calculée selon l'équation de Kelvin, en utilisant les paramètres relatifs à l'eau. On pourra se référer utilement à ce sujet par exemple aux ouvrages de S.J. Gregg et K.S.W. Sing (Adsorption, Surface Area and Porosity) et de J. Rouquérol et al. (Adsorption by Powders and Porous Solids).

Les charbons actifs utilisés dans le cadre de l'invention seront mis en forme, sous forme par exemple de granulés, dont le diamètre est par exemple compris entre 0,5 et 5 mm, d'extrudés, dont la longueur est d'environ 0,5 à quelques mm, ou des concassés de quelques millimètres de dimensions caractéristiques.

Le volume microporeux des charbons actifs sera par exemple compris entre 0,05 et 0,80 cm3/g, déterminé par exemple par adsorption d'azote à 77 K par la méthode du t-plot, ou selon l'équation de Dubinin et ses variantes.

Le volume mésoporeux sera préférentiellement compris entre 0,05 et 0,30 cm3/g, déterminé par adsorption d'azote à 77 K à une pression relative de P/P0 voisine de 0,98-0,99 diminué du volume microporeux.

Le volume macroporeux sera préférentiellement compris entre 0,10 et 0,50 cm3/g, déterminé par intrusion de mercure.

Comme exemple de charbons actifs répondant à ce critère, on peut par exemple citer le charbon actif AC35/3, de Ceca/Arkema, les charbons actifs PicaCarb E460-E et Picactif TA60 ou TA90, de Pica Carbon.

Dans cet exemple 400 MW d'électricité sont produites sans émission de CO₂ et avec recyclage du méthane.

Il doit être évident pour l'homme du métier que la présente invention ne doit pas être limitée aux détails donnés ci-dessus et permet des modes de réalisation sous de nombreuses autres formes spécifiques sans s'éloigner du domaine d'application de l'invention. Par conséquent, les présents modes de réalisation doivent être considérés à titre d'illustration, et peuvent être modifiés sans toutefois sortir de la portée définie par les revendications jointes.

## Revendications

1. Procédé de production d'hydrogène à partir d'une charge hydrocarbonée et de vapeur d'eau comprenant :
- une étape de production d'un gaz de synthèse dans une unité de vaporéformage de la charge hydrocarbonée en présence de la vapeur d'eau, un combustible apportant la chaleur nécessaire à la réaction,
- une étape de conversion à la vapeur du gaz de synthèse obtenu à l'étape précédente produisant un flux d'hydrogène contenant du méthane et du dioxyde de carbone,
- une étape de captage du dioxyde de carbone présent dans le flux obtenu à l'étape de conversion à la vapeur permettant de séparer le dioxyde de carbone du flux d'hydrogène,
- une étape de captage et de recyclage vers le vaporéformage d'impuretés présentes dans le flux d'hydrogène; ladite étape de captage et recyclage des impuretés est réalisée dans une unité d'adsorption comprenant au moins deux adsorbeurs et comprend au moins les phases successives suivantes :
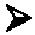 adsorption des impuretés sur le premier adsorbeur,
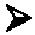 régénération du premier adsorbeur et adsorption des impuretés sur le deuxième adsorbeur, ladite régénération de l'adsorbeur est réalisée de la façon suivante:
• isolement de l'adsorbeur lorsqu'il est saturé et mise en ligne du deuxième adsorbeur,
• balayage du premier adsorbeur, avec un flux de charge hydrocarbonée destiné à servir de charge à l'unité de vaporéformage, et chauffé par échange avec de la vapeur d'eau destinée également à l'unité de vaporéformage, jusqu'à une température supérieure d'au moins 20°C à la température de condensation de la vapeur d'eau,
• régénération de l'adsorbeur réchauffé et désorption des impuretés par circulation de vapeur d'eau surchauffée d'au moins 20°C destinée à l'unité de vaporéformage,
• élimination de la vapeur d'eau présente dans l'adsorbeur régénéré par un balayage de l'adsorbeur avec un flux d'hydrogène pur et chaud,
• balayage de l'adsorbeur débarrassé de la vapeur d'eau par un flux d'hydrogène pur et froid.

2. Procédé de production d'hydrogène selon la revendication 1 dans lequel la charge hydrocarbonée est du gaz naturel.

3. Procédé de production d'hydrogène selon une des revendications 1 ou 2 dans lequel l'étape d'adsorption des impuretés est réalisée à une température comprise entre 20°C et 100°C.

4. Procédé de production d'hydrogène selon une des revendications 1 à 3 dans lequel l'étape d'adsorption est réalisée avec un adsorbant de type charbon actif ou tamis moléculaire carbone.

5. Procédé de production d'hydrogène selon une des revendications 1 à 4 dans lequel l'étape d'adsorption est réalisée avec un charbon préparé par activation physique à la vapeur.

6. Procédé de production d'hydrogène selon une des revendications 1 à 5 dans lequel l'étape d'adsorption est réalisée avec un charbon actif contenant des micropores dont le diamètre est inférieur à 2 nm, des macropores dont le diamètre est supérieur à 50 nm, et une quantité plus faible de mésopores dont le diamètre est compris entre 2 et 50 nm.

7. Procédé de production d'hydrogène selon une des revendications 1 à 6 dans lequel les impuretés adsorbées sont du méthane, du dioxyde de carbone et du monoxyde de carbone.

8. Procédé de production d'hydrogène selon une des revendications 1 à 7 dans lequel une partie du flux d'hydrogène chaud et saturé en vapeur d'eau obtenu après balayage de l'adsorbeur régénéré est envoyé vers les brûleurs de l'unité de réformage, et l'autre partie du flux est envoyé en mélange avec de la vapeur d'eau de dilution vers une turbine à gaz pour produire de l'électricité.

9. Procédé de production d'hydrogène selon une des revendications 1 à 8 dans lequel une partie du flux d'hydrogène froid obtenu après le balayage de l'adsorbeur régénéré est envoyé vers une unité extérieure, tandis que le reste de l'hydrogène est utilisé pour le balayage chaud, puis envoyé vers les brûleurs de l'unité de réformage.

10. Procédé de production d'hydrogène selon une des revendications 1 à 9 dans lequel le flux d'hydrogène réchauffé obtenu après la phase de refroidissement de l'adsorbeur est à nouveau réchauffé par échange avec de la vapeur d'eau et utilisé dans la phase d'élimination de la vapeur d'eau présente dans l'absorbeur.

11. Procédé de production d'hydrogène selon une des revendications 1 à 10 dans lequel l'étape de production du gaz de synthèse est réalisée à une pression comprise entre 2,5 MPa et 3,5 MPa.

12. Procédé de production d'hydrogène selon une des revendications 1 à 11 dans lequel l'étape de captage du dioxyde de carbone est réalisée dans une unité d'amine utilisant de la méthyldiéthylamine et au moins une autre amine.

## Patentansprüche

1. Verfahren zur Herstellung von Wasserstoff aus einer Kohlenwasserstoffbeschickung und Wasserdampf, das Folgendes umfasst:
- einen Schritt zur Herstellung eines Synthesegases in einer Dampfreformierungseinheit der Kohlenwasserstoffbeschickung in Gegenwart von Wasserdampf, wo bei ein Brennstoff die für die Reaktion notwendige Wärme liefert,
- einen Schritt der Umwandlung des im vorigen Schritt erhaltenen Synthesegases zu Dampf, wodurch ein Strom von Wasserstoff erzeugt wird, der Methan und Kohlendioxid enthält,
- einen Schritt des Auffangens von Kohlendioxid, das in dem im Schritt der Umwandlung in Dampf erhaltenen Strom vorhanden ist, was die Abtrennung von Kohlendioxid aus dem Wasserstoffstrom erlaubt,
- einen Schritt des Auffangens und des Rückführens zur Dampfreformierung von Verunreinigungen, die im Wasserstoffstrom vorhanden sind; wobei der Schritt des Auffangens und Rückführens von Verunreinigungen in einer Adsorptionseinheit erfolgt, die mindestens zwei Adsorber umfasst und mindestens die folgenden aufeinanderfolgenden Phasen umfasst:
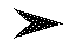 Adsorption der Verunreinigungen auf dem ersten Adsorber,
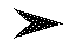 Regenerierung des ersten Adsorbers und Adsorption der Verunreinigungen auf dem zweiten Adsorber, wobei die Regenerierung des Adsorbers folgendermaßen erfolgt:
• Isolierung des Adsorbers, wenn er gesättigt ist, und Aufschalten des zweiten Adsorbers,
• Spülen des ersten Adsorbers mit einem Strom der Kohlenwasserstoffbeschickung, der dazu bestimmt ist, als Beschickung für die Dampfreformierungseinheit zu dienen, und Erwärmen durch Austausch mit dem Wasserdampf, der ebenfalls für die Dampfreformierungseinheit bestimmt ist, bis zu einer Temperatur von mindestens 20 °C bis zur Kondensationstemperatur des Wasserdampfs,
• Regenerierung des beheizten Adsorbers und Desorption von Verunreinigungen durch Zirkulation von um mindestens 20 °C überhitztem Dampf, der für die Dampfreformiereinheit bestimmt ist,
• Beseitigung des im regenerierten Adsorber vorhandenen Wasserdampfes durch Spülen des Adsorbers mit einem Strom von reinem und warmem Wasserstoff,
• Spülen des von Wasserdampf befreiten Adsorbers mit einem Strom von reinem und kaltem Wasserstoff.

2. Verfahren zur Herstellung von Wasserstoff nach Anspruch 1, wobei die Kohlenwasserstoffbeschickung Erdgas ist.

3. Verfahren zur Herstellung von Wasserstoff nach einem der Ansprüche 1 oder 2, wobei der Adsorptionsschritt von Verunreinigungen bei einer Temperatur zwischen 20 °C und 100 °C erfolgt.

4. Verfahren zur Herstellung von Wasserstoff nach einem der Ansprüche 1 bis 3, wobei der Adsorptionsschritt mit einem Adsorptionsmittel vom Typ Aktivkohle oder Kohlenstoffmolekularsieb erfolgt.

5. Verfahren zur Herstellung von Wasserstoff nach einem der Ansprüche 1 bis 4, wobei der Adsorptionsschritt mit einer Kohle erfolgt, die durch physikalische Dampfaktivierung hergestellt wurde.

6. Verfahren zur Herstellung von Wasserstoff nach einem der Ansprüche 1 bis 5, wobei der Adsorptionsschritt mit einer Aktivkohle erfolgt, die Mikroporen enthält, deren Durchmesser kleiner als 2 nm ist, Makroporen, deren Durchmesser größer als 50 nm ist und eine kleinere Menge an Mesoporen, deren Durchmesser zwischen 2 und 50 nm liegt.

7. Verfahren zur Herstellung von Wasserstoff nach einem der Ansprüche 1 bis 6, wobei die adsorbierten Verunreinigungen Methan, Kohlendioxid und Kohlenmonoxid sind.

8. Verfahren zur Herstellung von Wasserstoff nach einem der Ansprüche 1 bis 7, wobei ein Teil des Stroms von heißem und mit Wasserdampf gesättigtem Wasserstoff, der nach dem Spülen des regenerierten Adsorbers erhalten wird, zu den Brennern der Reformierungseinheit geleitet wird, und der andere Teil des Stromes im Gemisch mit verdünnendem Wasserdampf zu einer Gasturbine zur Stromerzeugung geleitet wird.

9. Verfahren zur Herstellung von Wasserstoff nach einem der Ansprüche 1 bis 8, wobei ein Teil des Stroms kalten Wasserstoffs, der nach dem Spülen des regenerierten Adsorbers erhalten wird, zu einer externen Einheit geleitet wird, während der Rest des Wasserstoffs zum heißen Spülen eingesetzt wird, dann zu den Brennern der Reformierungseinheit geleitet wird.

10. Verfahren zur Herstellung von Wasserstoff nach einem der Ansprüche 1 bis 9, wobei der Strom von erhitztem Wasserstoff, der nach der Abkühlphase des Adsorbers er halten wird, erneut durch Austausch mit Wasserdampf erhitzt und in der Phase des Entfernens des im Absorber vorhandenen Wasserdampfes eingesetzt wird.

11. Verfahren zur Herstellung von Wasserstoff nach einem der Ansprüche 1 bis 10, wobei der Herstellungsschritt des Synthesegases bei einem Druck zwischen 2,5 MPa und 3,5 MPa erfolgt.

12. Verfahren zur Herstellung von Wasserstoff nach einem der Ansprüche 1 bis 11, wobei der Schritt des Auffangens von Kohlendioxid in einer Aminierungseinheit erfolgt, wobei Methyldiethylamin und mindestens ein anderes Amin eingesetzt wird.

## Claims

1. A process for producing hydrogen from a hydrocarbon feed and steam, comprising:
- a step for producing a synthesis gas in a unit for steam reforming the hydrocarbon feed in the presence of steam, with a fuel providing the heat necessary for the reaction,
- a step for steam converting synthesis gas obtained in the preceding step, producing a stream of hydrogen containing methane and carbon dioxide,
- a step for capturing carbon dioxide present in the stream obtained from the steam conversion step in order to separate the carbon dioxide from the stream of hydrogen,
- a step for capturing and recycling impurities present in the stream of hydrogen to the steam reforming step, said step for capturing and recycling the impurities is carried out in an adsorption unit comprising at least two adsorbers and comprises at least one of the following successive phases:
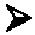 adsorbing the impurities on the first adsorber,
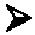 regenerating the first adsorber and adsorbing the impurities on the second adsorber, said adsorber regeneration phase is carried out as follows:
• isolating the adsorber when it is saturated and bringing the second adsorber on-line,
• flushing the first adsorber with a stream of a hydrocarbon feed intended to act as the feed for the steam reforming unit and heated by exchange with steam also intended for the steam reforming unit, to a temperature which is at least 20°C higher than the steam condensation temperature,
• regenerating the heated adsorber and desorbing the impurities by circulating steam superheated by at least 20°C intended for the steam reforming unit,
• eliminating steam present in the regenerated adsorber by flushing the adsorber with a stream of pure hot hydrogen,
• flushing the adsorber freed of steam with a stream of pure cold hydrogen.

2. A process for producing hydrogen according to claim 1, in which the hydrocarbon feed is natural gas.

3. A process for producing hydrogen according to claim 1 or claim 2, in which the step for adsorption of the impurities is carried out at a temperature in the range 20°C to 100°C.

4. A process for producing hydrogen according to one of claims 1 to 3, in which the adsorption step is carried out with an activated charcoal or carbon molecular sieve type adsorbant.

5. A process for producing hydrogen according to one of claims 1 to 4, in which the adsorption step is carried out with a charcoal prepared by physical steam activation.

6. A process for producing hydrogen according to one of claims 1 to 5, in which the adsorption step is carried out with an activated charcoal containing micropores with a diameter of less than 2 nm, macropores with a diameter of more than 50 nm, and a smaller quantity of mesopores with a diameter in the range 2 to 50 nm.

7. A process for producing hydrogen according to one of claims 1 to 6, in which the adsorbed impurities are methane, carbon dioxide and carbon monoxide.

8. A process for producing hydrogen according to one of claims 1 to 7, in which a portion of the hot hydrogen stream saturated with steam obtained after flushing the regenerated adsorber is sent to the burners for the reforming unit, and the other portion of the stream is sent as a mixture with the diluting steam to a gas turbine in order to produce electricity.

9. A process for producing hydrogen according to one of claims 1 to 8, in which a portion of the cold hydrogen stream obtained after flushing the regenerated adsorber is sent to an external unit while the remainder of the hydrogen is used for hot flushing then sent to the burners of the reforming unit.

10. A process for producing hydrogen according to one of claims 1 to 9, in which the heated hydrogen stream obtained after the adsorber cooling phase is heated again by exchange with steam and used in the phase for eliminating steam present in the adsorber.

11. A process for producing hydrogen according to one of claims 1 to 10, in which the synthesis gas production step is carried out at a pressure in the range 2.5 MPa to 3.5 MPa.

12. A process for producing hydrogen according to one of claims 1 to 11, in which the carbon dioxide capture step is carried out in an amine unit using methyldiethylamine and at least one other amine.
